# EUROPEAN PATENT APPLICATION

(11) **EP 4 385 847 A1**
(43) Date of publication of application: **19.06.2024**
(21) Application number: 23209840.0
(22) Date of filing: 14.11.2023
(51) Int. Cl.: B60W 40/09, B60W 50/14

(54) **METHOD FOR IMPROVING DRIVER BEHAVIOUR BY IDENTIFYING BEHAVIOUR OF DRIVER WHEN DRIVING ON A SPEED BUMP, COMMERCIAL VEHICLE, SERVER AND COMPUTER PROGRAM**

(30) Priority: 17.12.2022 IN 202211073263
(71) Applicant: ZF CV Systems Global GmbH, 3006 Bern (CH)
(72) Inventor: JEEVASHANTHI RAMASAMY, Chockalingam J R, 642109 Coimbatore (IN); NIZAMUDDEEN, Imaduddeen, 631001 Vellore (IN)
(74) Representative: Schäferjohann, Volker

(57) **Abstract**

The present invention proposes a method for improving driver behaviour by identifying behaviour of a driver (200) when driving on a speed bump (300), wherein in a first step detecting of a speed bump (300) by one or more processing units (TG) is executed, and in case a speed bump (300) is detected, the method comprises the further steps of determining a speed threshold (v_th) and/or a time threshold (t_th) for crossing the speed bump (300) by the vehicle (100), and determining whether the actual speed (v) of the vehicle (100) when crossing the speed bump (300) and/or the time (t) needed for crossing the speed bump (300) are above or below the determined threshold (v_th; t_th), and in case the actual speed is above the speed threshold (v_th), recording the speed (v) and output an alert (A) to the driver (200), or in case the time (t) needed for crossing the speed bump (300) is below the time threshold (t_th), recording the speed and output an alert (A) to the driver.

## Description

The behaviour of the driver has a high impact on lifetime of a vehicle such as a truck and/or a trailer, as well as their associated systems. There are different approaches to monitor the driver behaviour like behavioural approach, psychological approach, vehicle-based approach. The behavioural approach uses image processing techniques to identify driver drowsiness, while the physiological approach makes use of different sensors to monitor the blood pressure, ECG, heart rate etc. of the driver while driving. The above-mentioned approaches need additional sensors to be fitted to the vehicle as well as to the driver, which may be circumvented by the driver.

Patent EP 1 326 759 B1 shows a method of improving driver performance through performance feedback, in which the performance of an operator is assessed, stored, and reported to an operator. The assessment is made by using e.g. vehicle condition data, operator activity data as well as environmental data.

Hence, a new approach is needed in order to increase lifetime of a vehicle by monitoring the driver.

To solve this object, the present invention proposes a method for improving driver behaviour by identifying the behaviour of a driver when driving on a speed bump, wherein in a first step detecting of a speed bump by one or more processing units is executed, and in case a speed bump is detected, the method comprises the further steps of determining a speed threshold and/or a time threshold for crossing the speed bump by the vehicle, and determining whether the actual speed of the vehicle when crossing the speed bump and/or the time needed for crossing the speed bump are above or below the determined threshold, and in case the actual speed is above the speed threshold, recording the speed and outputting an alert to the driver, or in case the time needed for crossing the speed bump is below the time threshold, recording the speed and outputting an alert to the driver.

In one embodiment, in case the actual speed is above the speed threshold or the time needed for crossing the speed bump is below the time threshold, the method comprises the further step of additionally sending the alert and associated data to a fleet server.

In one embodiment the fleet server analyses the received alert and associated data and creates and stores a rating of the behaviour of the driver.

In one embodiment the fleet server creates a ranking for all drivers of vehicles sending alerts and associated data based on the drivers' ratings.

In one embodiment the data point of the speed and/or time before the bump and the speed and/or time on the speed bump and the speed and/or time after the speed bump are gathered and processed by the telematics gateway in order to determine whether the actual speed is within the speed threshold and/or the time threshold for crossing the speed bump by the vehicle.

In one embodiment a speed bump is detected by continuously monitoring speed, acceleration and/or gyroscope data of the vehicle being in motion.

Additionally, a commercial vehicle is proposed, comprising a human machine interface adapted to display a message to a driver of the commercial vehicle, and a speed monitoring unit, an acceleration monitoring unit and a gyroscope unit, one or more processing units, which are adapted to receive data from the speed monitoring unit, the acceleration monitoring unit and the gyroscope unit, configured to process the data according to the method, and configured to send an alert to be displayed at the human machine interface.

In one embodiment the processing units are further adapted to send the alert to an external fleet server for further processing.

Additionally, a fleet server is proposed, being adapted to receive an alert and associated data from the processing units, to analyze the received information and to rate the behaviour of the driver based on the received information.

Also, a computer program product is proposed, comprising instructions, which, when the program is executed by a processing unit, cause the processing unit to carry out the steps of the method.

For a more complete understanding of the invention, the invention will now be described in detail with reference to the accompanying drawings. The detailed description will illustrate and describe what is considered as preferred embodiments of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawings and the claims disclosing the invention may be essential for the invention considered alone or in combination. In particular, any reference signs in the claims shall not be construed as limiting the scope of the invention.

In the accompanying drawings:
Figure 1 shows a flow diagram of the detailed working principle of the method according to one embodiment of the invention; and
Figure 2 shows a use case scenario for the method according to one embodiment of the invention.

While the present disclosure is subject to various modifications and alternative forms, specific embodiments thereof have been shown by way of example in the drawings and will herein be described in detail. The invention should be understood to not be limited to the particular forms disclosed, but on the contrary, the intention is to cover all modifications, equivalents, and alternatives falling within the spirit and scope of the present disclosure.

The invention is specifically directed to the operation of commercial vehicles (in the following only named vehicle 100) and operators of commercial vehicles, which have several vehicles 100 (fleet of vehicles) and drivers 200 and can thus use the data acquired from their vehicles 100 in order to improve lifetime of their vehicles 100 by monitoring and rating the behaviour of a driver 200.

As initially mentioned, the behaviour of a driver 200 has a high impact on lifetime of a vehicle 100, including a truck and/or trailer and associated systems. In order to increase lifetime of a vehicle 100 by monitoring the driver 200, this invention proposes a vehicle-based approach to contextualize the behaviour of a driver 200 using vehicle data. Specifically, the behaviour of the driver 200 on speed bumps 300 is monitored. The term "speed bumps" is used for any speed braking devices used on roads 1 (or streets), which have the purpose of slowing down speed of a vehicle 100 and of making sure (or at least trying to) that specified speed limits are maintained by the driver while crossing the speed bumps 300. Such speed bumps 300 can lead to damages of vehicles and/or trailers when crossed at excessive speed, i.e. a speed that is higher than a designated speed for crossing the speed bump 300.

Speed bumps 300 are generally not standardized throughout the world, so that it is not possible to indicate a fixed maximum speed that is allowed for crossing speed bumps 300 with a vehicle. Also, the allowed maximum speed, which does most possibly not lead to damages, is very dependent on the vehicle 100, e.g. if the vehicle is a passenger car, a bus, a truck, a truck with trailer and whether the trailer is empty or loaded (and to which degree). There are different approaches to determine a designated speed (and thus time) for crossing a speed bump 300 placed on a road 1.

One approach is that in each country speed bumps 300 are more or less similar with some variations in height and/or length. Hence, the maximum speed v can be calculated, and thus determined, for each type of speed bump 300 and vehicle type in advance and provided to the vehicle 100 e.g. from a fleet server 400. Alternatively, an allowed maximum speed can be set for a vehicle 100, no matter of speed bump 300 type. Furthermore, speed limits are often indicated by a sign before reaching a speed bump 300. Such a sign can be identified by a vehicle 100 sensor (e.g. a camera) and set as the maximum allowed speed (threshold speed v_th) for crossing the speed bump 300 in order to rate the driver 200 as not driving harshly. Another approach is to use historic data of vehicles 100 that have been driving on the route before and have recorded speed bumps 300 and computed a designated maximum speed for crossing the speed bump 300 without causing damages to the vehicle 100 and/or the trailer. Such information may be stored in and provided by a fleet server 400. Another approach is to derive the designated speed from map data including such information.

A further, preferred approach is to gather the designated speed directly by the vehicle 100 driving on the road 1. This approach can be realized by monitoring and calculating devices which are already part of the vehicle 100 such as the telematic gateway TG being a processing unit, a speed measuring unit 101, an acceleration monitoring unit 102 and a gyroscope unit 103 (for monitoring angular speed and orientation). Also, the time for crossing the speed bump 300 is measured by a suitable unit of the vehicle 100. Typically, the sensors 101 to 103 are connected to a control unit 104 of an air suspension system. The control unit 104 reports the sensor data also to other control units, e.g. via vehicle bus SAE J1939. All the parameters can be used for computing, e.g. by the telematic gateway TG or another calculating unit of the vehicle, a designated maximum speed for crossing the speed bump 300 without causing damages to the vehicle 100 and/or the trailer. In an embodiment, the telematic gateway TG gathers and processes the data points of the speed v and/or time t before the speed bump 300 and the speed v and/or time t on the speed bump 300 (i.e. when driving on it) and the speed v and/or time t after the speed bump 300. These data points are necessary to check whether the speed v or time t taken to cross the particular speed bump is within the speed and/or time threshold v_th, t_th for the particular vehicle. There may be cases in which the speed is the same before, on and after the speed bump 300, i.e. the driver has not slowed down. Also, there may be cases in which the speed on the speed bump 300 is not significantly less than the speed before (being a "normal" speed driven on the roads). In both cases, also the time for crossing the speed bump 300 will be higher than expected (for a certain speed). Hence, the TG can determine that the driver 200 has not slowed down and process this data accordingly.

It is to be noted that the time threshold t_th calculation also as similar as speed threshold v_th is an additional check to ensure that the vehicle safely crosses the particular speed bump without leading to lifetime or performance of the corresponding truck/trailer and associated systems. Hence, also only speed or time may be used in order to identify driver behaviour.

This approach can be used to rate the behaviour of a driver 200 when driving the vehicle 100 and thus help making drivers 200 more aware of the fact that damages should be avoided due to "harsh" behaviour of a driver 200. Since the behaviour of a driver 200 is analyzed and rated after the crossing of a speed bump 300, drivers 200 must be more vigilant when driving in order to get a good rate or avoid a bad rate.

As can be seen, different approaches can be used for determining an allowed threshold speed v_th for crossing a speed bump 300. Determining the speed and time threshold v_th, t_th involves multiple factors. In an ideal scenario, the speed should not exceed a certain limit, which may be about 8 kph (kilometers per hour). However, as mentioned before, the threshold to be set may vary based on the height of the speed bump, vehicle type, etc. Based on the allowed threshold speed v_th, also a minimum time t_th (threshold time) for crossing the speed bump 300 can be calculated by knowing the height and length of the speed bump 300 and the maximum speed (threshold speed v_th) with which it may be crossed.

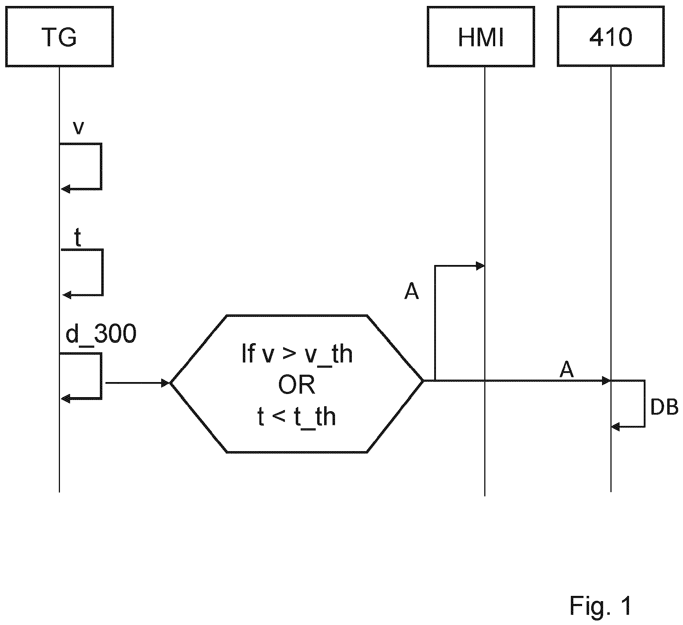

The method for improving behaviour of a driver 200 by identifying behaviour of a driver 200 when driving on a speed bump 300 will be described in the following with reference to the Fig. 1. While the vehicle 100 is driving and when a speed bump 300 is detected d_300 based on the acceleration and/or gyrospcope data, also the time t needed to cross the speed bump 300 and the actual vehicle 100 speed v is observed by e.g. the vehicle control unit 104. Since the sensor data is also important for other control unit such as braking control unit etc., the sensor data from sensors 101 to 103 may be published on the vehicle communication bus SAE J1939, which is a CAN bus (Controller Area Network). By observing the datagrams on the vehicle bus SAE J1939, the telematics gateway TG gets the sensor data and performs the calculation of the time t needed to cross the speed bump 300.

If the time t taken to cross the speed bump 300 (from a dedicated start point to a dedicated end point) is less than a threshold time t_th or if the speed v of the vehicle 100 is greater than a threshold speed v_th, then an alert A shall be given to the driver 100 via a user interface HMI (human-machine-interface). Additionally, the alert A can be automatically transmitted to a fleet server 400 by the telematics gateway TG of the vehicle 100, e.g. via a mobile network connection. Based on the alert A and the information as transmitted, the fleet server 400 can analyze the behaviour of a driver 200 (indicated as DB in figure 1) and decide whether it is rated as being "harsh", i.e. not suitable for avoiding damages to the vehicle (and trailer, if applicable). The decision, whether driving is harsh can be based on available data after crossing the bump 300 such as vehicle status (bumpers, tires, chassis etc.) and/or on the information about the amount of time t and/or speed v exceeding the threshold time t_th and/or speed v_th when crossing the speed bump 300. It is noted, that the electronic control unit 104, the telematics gateway TG and the human-machine-interface HMI are connected to each other via on or more internal communication busses, e.g. the vehicle bus SAE J1939 (not shown).

If the behaviour of a driver 200 is rated as being "harsh", the driver 200 also gets a respective rate, e.g. "driving harshly". Such rating can be done for many drivers of a fleet. Thus, behaviour of several drivers 200 can be put in a ranking and can thus be compared. Hence, a driver 200 can be a preferred driver in case he is high in ranking. Also, rewards or penalties can be given when e.g. (not) reaching a minimum ranking.

The before mentioned processing of vehicle data such as speed and acceleration and gyroscope data, as well as the runtime, i.e. the time t needed for crossing the speed bump 300, is preferably done in the telematics gateway TG of the vehicle 100. Part of the telematics gateway TG is a calculation unit, which may apply edge computing in order to perform the calculations regarding the threshold speed v_th and threshold time t_th and the decision whether the vehicle 100 crosses (or has crossed) the speed bump 300 at a speed v higher than the threshold speed v_th or a time t lower than a threshold time t_th. Monitoring both, speed v and time t for crossing the speed bump 300, has the advantage that even in case one of the monitored parameters (v and t) cannot be gathered, the other can equally be used in order to decide whether the driver is driving "harshly".

The described method is implemented as a computer program product, preferably executed on the telematics gateway TG. Parts of the method can also be executed at a fleet server 400, being also a calculation unit.

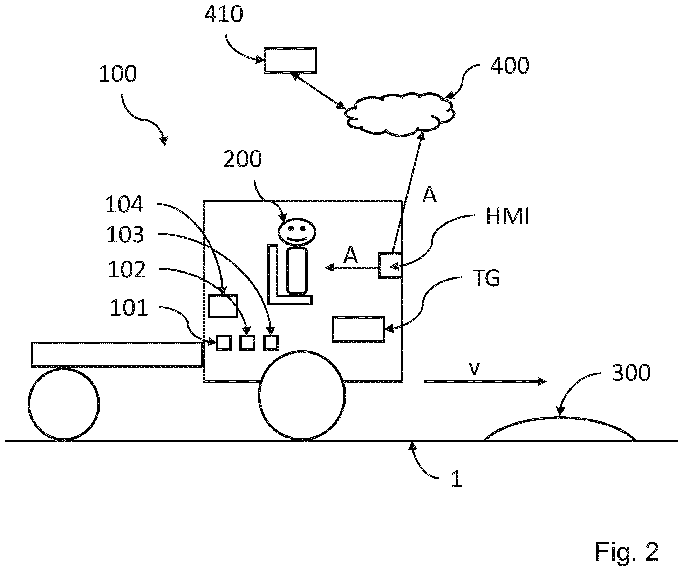

A use case is shown in Fig. 2, in which a vehicle 100 driving with a speed v on a road 1 is shown. The vehicle 100 can detect a speed bump 300 while crossing it by using monitoring units such as a speed measuring unit 101, an acceleration monitoring unit 102 and/or a gyroscope unit 103. The data collected with the monitoring units are processed in an internal processing unit, which in this case is a telematic gateway TG comprising a computing device, which may apply edge computing. The collected data is processed such that a maximum allowed speed is calculated and set for crossing the speed bump 300 as speed threshold v_th. Also, a minimum time may be set for crossing the speed bump 300 as time threshold t_th. In case the vehicle 100 exceeds the speed threshold v_th (v > v_th) or is faster than a minimum allowed time threshold t_th (t < t_th), the telematic gateway TG recognizes this fact and outputs an alert A to the driver 200 via the HMI (or a dashboard). Additionally, the alert A, i.e. all data leading to the driver 200 alert A as well as the fact that an alert A has been given, is preferably sent to a fleet server 410, which collects information and data from the vehicles 100 of the associated fleet. The fleet server 410 can then analyze the behaviour of the driver 200 (indicated as DB in figure 1) and create a rating of the drivers 200 of the fleet, as already explained with reference to Fig. 1. The communication to the fleet server 410 placed somewhere in the cloud 400 may be performed with Internet communication protocols, supported with mobile communication protocols, etc.

Due to the provided method, driver behaviour can be improved and thus the overall lifetime of a vehicle 100 (and trailer, if applicable) can be increased. Also, due to the fact that monitoring units are used that are already part of the vehicle 100, the method can be implemented without excessive costs and effort.

### Reference numerals

- 1: road
- 100: vehicle
- 101: speed measuring unit
- 102: acceleration monitoring unit
- 103: gyroscope unit
- 104: control unit

- 200: driver
- 300: speed bump
- 400: cloud
- 410: fleet server

- t: time taken to cross the speed bump
- v: speed when crossing the speed bump
- t_th: threshold time
- v_th: threshold speed
- d_300: detection of speed bump

- A: alert
- DB: analysis of driver behaviour

- TG: processing unit (telematics gateway)
- HMI: user interface (human-machine-interface)

## Claims

1. A method for improving driver behaviour by identifying behaviour of a driver (200) when driving on a speed bump (300), wherein in a first step detecting of a speed bump (300) by one or more processing units (TG) is executed, and in case a speed bump (300) is detected, the method comprises the further steps of:
- determining a speed threshold (v_th) and/or a time threshold (t_th) for crossing the speed bump (300) by the vehicle (100), and
- determining whether the actual speed (v) of the vehicle (100) when crossing the speed bump (300) and/or the time (t) needed for crossing the speed bump (300) are above or below the determined threshold (v_th; t_th), and
- in case the actual speed (v) is above the speed threshold (v_th), recording the speed (v) and output an alert (A) to the driver (200), or
- in case the time (t) needed for crossing the speed bump (300) is below the time threshold (t_th), recording the speed (v) and output an alert (A) to the driver (200).

2. A method according to claim 1, wherein in case the actual speed (v) is above the speed threshold (v_th) or the time (t) needed for crossing the speed bump (300) is below the time threshold (t_th), the method comprises the further step of additionally sending the alert (A) and associated data to a fleet server (410).

3. A method according to claim 2, wherein the fleet server (410) analyzes the received alert (A) and associated data and creates and stores a rating of the behaviour of the driver (200).

4. A method according to claim 3, wherein the fleet server (410) creates a ranking for all drivers (200) of vehicles (100) sending alerts (A) and associated data based on the drivers' (200) ratings.

5. A method according to any one of the preceding claims, wherein the data point of the speed (v) and/or time (t) before the bump and the speed (v) and/or time (t) on the speed bump and the speed (v) and/or time (t) after the speed bump are gathered and processed by the telematics gateway (TG) in order to determine whether the actual speed is within the speed threshold (v_th) and/or the time threshold (t_th) for crossing the speed bump (300) by the vehicle (100).

6. A method according to any one of the preceding claims, wherein a speed bump (300) is detected by continuously monitoring speed (v), acceleration and/or gyroscope data of the vehicle (100) being in motion.

7. Commercial vehicle, comprising
- a human machine interface (HMI) adapted to display a message to a driver (200) of the commercial vehicle, and
- a speed monitoring unit (101), an acceleration monitoring unit (102) and a gyroscope unit (103),
- one or more processing units (TG), which are adapted to receive data from the speed monitoring unit, the acceleration monitoring unit (102) and the gyroscope unit (101-103), configured to process the data according to the method according to any one of the preceding claims, and configured to send an alert (A) to be displayed at the human machine interface (HMI).

8. Commercial vehicle according to claim 7, wherein the processing units (TG) are further adapted to send the alert to an external fleet server (410) for further processing.

9. Fleet server (410), being adapted to receive an alert (A) and associated data from the processing units (TG), to analyse the received information and to rate the behaviour of the driver (200) based on the received information.

10. A computer program product comprising instructions, which, when the program is executed by a processing unit (TG), cause the processing unit (TG) to carry out the steps of the method of claims 1 to 6.
